# EUROPÄISCHE PATENTANMELDUNG

(11) **EP 3 527 876 A1**
(43) Veröffentlichungstag der Anmeldung: **21.08.2019**
(21) Anmeldenummer: 18157331.2
(22) Anmeldetag: 19.02.2018
(51) Int. Cl.: F21S 41/143, F21S 41/25, F21S 41/255, F21S 41/26, F21S 41/275, F21S 41/32, F21S 41/24, F21S 41/663

(54) **KRAFTFAHRZEUGSCHEINWERFER MIT LICHTLEITELEMENTEN ANGEORDNET IN MATRIXFORM**

(71) Anmelder: ZKW Group GmbH, 3250 Wieselburg (AT)
(72) Erfinder: Taudt, Lukas, 3250 Wieselburg (AT); Brauner, Nina, 3033 Altlengbach (AT); Schragl, Mathias, 3261 Zarnsdorf (AT); Hechenberger, Josef, 5310 Mondsee (AT); Kern, Matthias, 3385 Prinzersdorf (AT); Längauer, Christoph, 3293 Lunz am See (AT)
(74) Vertreter: Patentanwaltskanzlei Matschnig & Forsthuber OG

(57) **Zusammenfassung**

Ein Kraftfahrzeugscheinwerfer (1) mit einer Leuchteinheit (2), welche zumindest eine Lichtquelle (3) und eine Vorsatzoptik (4) mit einer Lichtaustrittsfläche (5) aufweist, und mit einer der Leuchteinheit nachgeordneten Projektionsoptik (7), wobei die Vorsatzoptik mehrere Lichtleitelemente (6) mit je einer Lichteinkoppelfläche (8) zum Einspeisen von Licht der zumindest einen Lichtquelle und mit in der Lichtaustrittsfläche der Vorsatzoptik liegenden Lichtauskoppelflächen (9) aufweist, sich das Lichtleitelement zwischen der Lichteinkoppelfläche und der Lichtauskoppelfläche erstreckt, wobei die Lichtauskoppelfläche eine größere Fläche besitzt als die Lichteinkoppelfläche, das Lichtleitelement seitlich von zwei Seitenflächen (10), oben von einer Dachfläche (11) und unten von einer Bodenfläche (12) begrenzt ist und zwischen der Lichtauskoppelfläche und der Lichteinkoppelfläche verjüngt verlaufend ausgebildet ist, wobei die Breite der Bodenfläche von der Lichtaustrittsfläche ausgehend abnimmt, wobei die Bodenfläche (12) und/oder die Dachfläche (11) zumindest eines Lichtleitelements (6) hinsichtlich ihrer Breite zwischen der Lichtauskoppelfläche (9) und der Lichteinkoppelfläche (8) eine Einschnürung (14) mit einer minimalen Breite (bₘ) der Bodenfläche und/oder der Dachfläche aufweist.

## Beschreibung

Die Erfindung bezieht sich auf einen Kraftfahrzeugscheinwerfer mit einer Leuchteinheit, welche zumindest eine Lichtquelle und eine Vorsatzoptik mit einer Lichtaustrittsfläche aufweist, und mit einer der Leuchteinheit nachgeordneten Projektionsoptik, wobei die Vorsatzoptik mehrere Lichtleitelemente mit je einer Lichteinkoppelfläche zum Einspeisen von Licht der zumindest einen Lichtquelle und mit in der Lichtaustrittsfläche der Vorsatzoptik liegenden Lichtauskoppelflächen aufweist, sich das Lichtleitelement zwischen der Lichteinkoppelfläche und der Lichtauskoppelfläche erstreckt, wobei die Lichtauskoppelfläche eine größere Fläche besitzt als die Lichteinkoppelfläche, das Lichtleitelement seitlich von zwei Seitenflächen, oben von einer Dachfläche und unten von einer Bodenfläche begrenzt und zwischen der Lichtaustrittsfläche und der Lichteinkoppelfläche verjüngt verlaufend ausgebildet ist, wobei die Breite der Bodenfläche und/oder der Dachfläche von der Lichtaustrittsfläche ausgehend abnimmt.

Ein Scheinwerfer dieser Art ist beispielsweise in der eigenen WO 2013/166535 A2 gezeigt. Wesentlich für ein praxistaugliches Lichtbild ist bei einem solchen Scheinwerfer die Ausbildung der Lichtleitelemente, in welchen das Licht durch Totalreflexion an den Begrenzungswänden geführt wird.

Eine Aufgabe der Erfindung besteht darin, bei einem Scheinwerfer der gegenständlichen Art die Formgebung der Lichtleitelemente vor allem hinsichtlich einer noch besseren Homogenität und maximalen Helligkeit des erzeugten Lichtbildes zu optimieren.

Diese Aufgabe wird mit einem Scheinwerfer der eingangs genannten Art gelöst, bei welchem die Bodenfläche und/oder die Dachfläche zumindest eines Lichtleitelements hinsichtlich ihrer Breite zwischen der Lichtaustrittsfläche und der Lichteinkoppelfläche eine Einschnürung mit einer minimalen Breite der Bodenfläche und/oder der Dachfläche aufweist.

Dank der Erfindung ergibt sich für jedes verwendete und erfindungsgemäß ausgebildete Lichtleitelement eine Lichtverteilung mit weniger störenden Bereichen aber einer höheren maximale Lichtstärke an der Lichtaustrittsfläche bzw. im erzeugten Lichtbild, sodass man es in der Hand hat, auch das gesamte, von der Mehrzahl der Lichtleitelemente erzeugte Lichtbild zu verbessern.

Bei einer lichttechnisch zweckmäßigen Weiterbildung kann vorgesehen sein, dass die Dachfläche über schmale Abkantungen beidseitig in die Seitenflächen übergeht.

Des Weiteren kann es empfehlenswert sein, wenn die Lichtleitelemente in einer matrixartiger Anordnung zusammengefasst sein.

Vorteilhaft kann es sein, wenn Lichtleitelemente einer untersten Reihe einer zumindest zweizeiligen Matrix von Lichtleitelementen eine Einschnürung aufweisen.

In anderen Fällen kann es empfehlenswert sein, wenn Lichtleitelemente einer obersten Reihe einer zumindest zweizeiligen Matrix von Lichtleitelementen eine Einschnürung aufweisen. Vorteilhaft ist es, wenn die Lichtleitelemente in ihrem vorderen Bereich einstückig miteinander verbunden sind, da dies die Herstellung erleichtert und zu einer kompakten und stabilen Vorsatzoptik führt.

Dabei ist es sinnvoll, wenn die Lichtauskoppelflächen der Lichtleitelemente zu der Lichtaustrittsfläche der Vorsatzoptik zusammenfallen.

Bei einer praxisgerechten Ausbildung ist vorgesehen, dass die die Breite der Einschnürung 10 bis 80 % der Breite der Lichteinkoppelfläche beträgt.

In der Praxis erhält man besonders günstige Ergebnisse hinsichtlich des gewünschten Lichtbildes, falls die Einschnürung in der der Lichteinkoppelfläche nächstgelegenen Hälfte des Lichtleitelements ausgebildet ist.

Die Erfindung samt weiteren Vorteilen und ihren Unterschieden zum Stand der Technik ist im Folgenden auch an Hand von Ausführungsbeispielen näher erläutert und in der Zeichnung veranschaulicht. In dieser zeigen
Fig. 1 schematisch und in schaubildlicher Darstellung Komponenten eines Scheinwerfers, nämlich eine Leuchteinheit mit vorgesetztem Brennglasblech und einer Projektionslinse,
Fig. 2 in schaubildlicher Darstellung eine Vorsatzoptik, schräg von hinten in Richtung der Lichteinkoppelflächen der Lichtleitelemente gesehen,
Fig. 3 ein einzelnes Lichtleitelement nach der Erfindung, schräg von hinten in Richtung seiner Lichteinkoppelfläche gesehen,
Fig. 4 das Lichtleitelement der Fig. 3 in einer Ansicht von unten in Richtung seiner Bodenfläche gesehen,
Fig. 5 ein einzelnes Lichtleitelement nach dem Stand der Technik, schräg von hinten in Richtung seiner Lichteinkoppelfläche gesehen,
Fig. 6 das Lichtleitelement der Fig. 5 in einer Ansicht von unten in Richtung seiner Bodenfläche gesehen,
Fig. 7 eine beispielsweise Lichtverteilung eines Scheinwerfers nach der Erfindung,
Fig. 8 den Verlauf der Lichtstärke längs einer mittigen Linie der Fig. 7,
Fig. 9 eine beispielsweise Lichtverteilung eines Scheinwerfers nach dem Stand der Technik und
Fig. 10 den Verlauf der Lichtstärke längs einer mittigen Linie der Fig. 9.

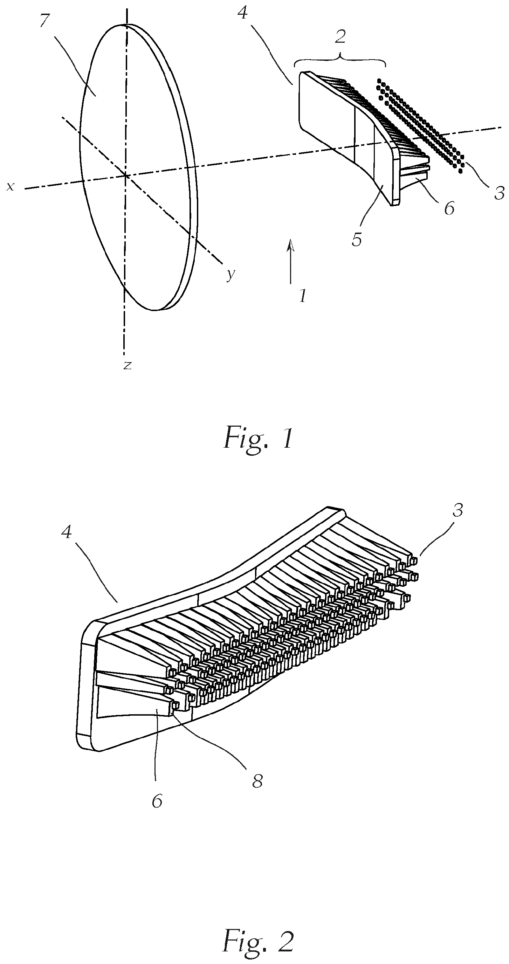

In der Darstellung nach **Fig. 1** erkennt man in schematischer Ansicht einen Scheinwerfer **1** nach der Erfindung mit seinen für die Erläuterung der Erfindung wesentlichen Bestandteilen, wobei es für den Fachmann klar ist, dass ein Schweinwerfer eine Vielzahl weiterer, hier nicht gezeigter Bestandteile besitzt, wie Ein- und Verstelleinrichtungen, elektrische Versorgungsmittel, Blenden und vieles mehr. Wenn im Zusammenhang mit der Erfindung der Begriff "Scheinwerfer" verwendet wird, so soll dieser Begriff auch einzelne Projektionsmodule beinhalten, die auch in Kombination in einem übergeordneten Scheinwerfer enthalten sein können.

In diesen und den folgenden Figuren werden für gleiche oder vergleichbare Elemente zum Zwecke der einfacheren Erläuterung und Darstellung gleiche Bezugszeichen verwendet.

Die in den Ansprüchen verwendeten Bezugszeichen sollen lediglich die Lesbarkeit der Ansprüche und das Verständnis der Erfindung erleichtern und haben keinesfalls einen den Schutzumfang der Erfindung beeinträchtigenden Charakter.

Begriffe hinsichtlich des Ortes oder einer Orientierung, wie beispielsweise "oben", "unten", "vorne", "darunter", "darüber" etc. werden in der Beschreibung lediglich zur Vereinfachung gewählt und beziehen sich möglicherweise auf die Darstellung in der Zeichnung nicht jedoch notwendigerweise auf eine Gebrauchs- oder Einbaulage.

Der Kraftfahrzeugscheinwerfer 1 besitzt eine Leuchteinheit **2,** welche mehrere Lichtquellen, hier ein Array von Leuchtdioden, kurz LEDs **3,** und eine Vorsatzoptik **4** mit einer Lichtaustrittsfläche **5** aufweist, wobei die Vorsatzoptik 4 eine Anzahl von Lichtleitelementen **6** umfasst. Die LEDs 3 strahlen ihr Licht in die lichtleitende Vorsatzoptik 4, welche nach vorne ein gewünschtes Lichtmuster abgibt. Dieses Lichtmuster wird mittels einer Projektionsoptik **7,** die im vorliegenden Fall eine einstückige Linse ist, in den Verkehrsraum projiziert.

In der größeren Darstellung der **Fig. 2** erkennt man eine beispielsweise Ausbildung der Vorsatzoptik 4 mit einer Vielzahl von Lichtleitelementen 6, die je eine Lichteinkoppelfläche **8** besitzen. Vorzugsweise ist jedem Lichtleitelement 6 genau eine Lichtquelle zugeordnet, insbesondere eine LED 3 oder mehrere LEDs. Es sollte klar sein, dass auch andere Lichtquellen als LEDs zur Anwendung kommen können. Bei der dargestellten beispielsweisen Ausführungsform der Leuchteinheit 2 sind die Lichtleitelemente 6 länglich ausgebildet, mit einer größeren Ausdehnung in Ausbreitungsrichtung des Lichtes als quer dazu. Sie bestehen vorzugsweise aus hochtransparenten, lichtleitenden und formbaren Kunststoffen, welche für die Herstellung von komplexen Geometrien gut geeignet sind. Besonders bevorzugt sind dabei Silikonmaterialien. Es ist jedoch auch die Verwendung von Gläsern möglich.

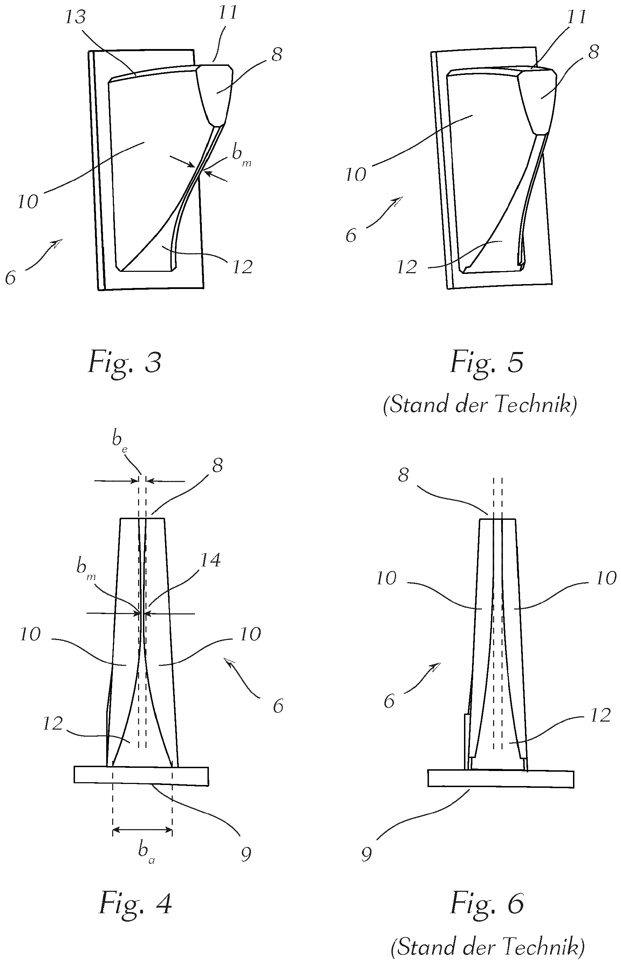

In den **Fig. 3** und **4****,** welche ein einzelnes Lichtleitelement 6 in vergrößerter Darstellung zeigen, erkennt man die genauere Form der Lichtleitelemente 6. Diese weisen, ausgehend von Lichtauskoppelflächen **9** einen zu ihren Lichteinkoppelfläche 8 hin sich verjüngenden Querschnitt auf. Beispielsweise kann vorgesehen sein, dass die Lichtleitelemente 6 kegelstumpfförmig oder wie in den Figuren gezeigt annähernd trapezförmig ausgebildet sind.

In die Lichteinkoppelflächen 8 wird das Licht der zumindest einen Lichtquelle, hier der LEDs 3 eingespeist. Die Lichtauskoppelflächen **9** liegen in der Lichtaustrittsfläche 5 der Vorsatzoptik 4. Zufolge der angesprochenen Verjüngung besitzt die Lichtauskoppelfläche 9 eine größere Fläche als die Lichteinkoppelfläche 8. Seitlich ist das Lichtleitelement 6 von zwei Seitenflächen **10** begrenzt, oben von einer Dachfläche **11** und unten von einer Bodenfläche **12.** Die Dachfläche 11 geht bei der gezeigten Ausführungsform über schmale Abkantungen **13** beidseitig in die Seitenflächen 10 über.

Wie aus den Fig. 3 und 4 ersichtlich, nimmt die Breite der Bodenfläche 12 von der Lichtauskoppelfläche 9 ausgehend zur Lichteinkoppelfläche 8 ab, jedoch nicht kontinuierlich, denn die Bodenfläche 12 weist hinsichtlich ihrer Breite zwischen der Lichtauskoppelfläche 9 und der Lichteinkoppelfläche 8 eine Einschnürung **14** auf, d.h. die Breite der Bodenfläche 12 nimmt, ausgehend von einer Breite **bₐ** der Lichtauskoppelfläche 9 bis zum Mittenbereich der Einschnürung 14 ab, wo die Breite **bₘ** am geringsten ist, und nimmt dann wieder in Richtung der Lichteinkoppelfläche 8 mit einer Breite **bₑ** zu. Anders ausgedrückt weist die Breite der Bodenfläche 12 zwischen der Lichtauskoppelfläche 9 und der Lichteinkoppelfläche 8 ein Minimum bₘ auf. Diese Ausbildung im Sinne der Erfindung führt zu einer verbesserten Lichtführung und zu einer Lichtverteilung, die weniger störende Bereiche aber eine höhere maximale Lichtstärke ergibt, was weiter unten noch gezeigt wird.

Um eine Vorstellung über mögliche Abmessungen zu geben, sei für ein praktisches Ausführungsbeispiel folgendes angegeben:
Lichtauskoppelfläche 7,7 mm², Lichteinkoppelfläche 1,5 mm², Länge des Lichtleitelements 15 mm, Breite bₐ 1,8 mm, Breite bₘ 0,3 mm, Breite bₑ 0,6 mm.

Bei dem dargestellten und oben beschriebenen Ausführungsbeispiel ist die Einschnürung 14 an der Bodenfläche 12 ausgebildet. Es ist aber auch möglich, sinngemäß eine Einschnürung an der Dachfläche 11 auszubilden, was besonders für das Lichtbild vorteilhaft ist, das von einer oberen Reihe einer matrixartig ausgestalteten Vorsatzoptik günstig ist. In diesem zuletzt genannten Fall kann vorgesehen sein, dass die Breite der Bodenfläche 12 ausgehend von der Lichteinkoppelfläche 8 bis zur Lichtauskoppelfläche 9 hin stetig abnimmt. Jedoch ist es auch möglich, dass eine Einschnürung 14 sowohl in der Dachfläche 11 als auch in der Bodenfläche 12 ausgebildet ist.

Generell zeigen sich besonders gute Ergebnisse, wenn die Breite bₘ der Einschnürung 14 10 bis 80 % der Breite bₑ der Lichteinkoppelfläche 8 beträgt. Außerdem erhält man besonders günstige Ergebnisse hinsichtlich des gewünschten Lichtbildes, falls die Einschnürung in der der Lichteinkoppelfläche nächstgelegenen Hälfte des Lichtleitelements ausgebildet ist.

Wie man den Fig. 1 und 2 weiters entnehmen kann, sind die Lichtleitelemente 6 matrixartig einstückig zusammengefasst, wobei ihre Lichtauskoppelflächen 9 zu der Lichtaustrittsfläche 5 der Vorsatzoptik 4 zusammenfallen. Die Lichtleitelemente 6 können auch zu mehreren Segmenten zusammengefasst sein, welche dann die Vorsatzoptik 4 bilden, wie in Fig. 1 und 2 mit drei Segmenten gezeigt. Dabei können die Lichtaustrittsflächen der einzelnen Segmente eben oder gekrümmt sein. Weiters kann in Abhängigkeit von dem benötigtem Lichtbild auch vorgesehen sein, dass lediglich einzelne Lichtleitelemente 6 oder Gruppen von Lichtleitelementen 6 gemäß der Erfindung ausgebildet sind und der verbleibende Rest nach dem Stand der Technik ohne Einschnürung 14.

Die Lichtauskoppelflächen 9 der Lichtleitelemente 6 können zu einer gemeinsamen Lichtaustrittsfläche 5 der Vorsatzoptik 4 zusammenfallen. Die gemeinsame Lichtaustrittsfläche ist typischerweise eine gekrümmte Fläche, die üblicherweise der Petzval-Fläche der Abbildungsoptik (z.B. eine Abbildungslinse) folgt. Für bestimmte Anwendungen können aber auch bewusste Abweichungen in der Krümmung eingesetzt werden, um im Randbereich Abbildungsfehler zur Lichthomogenisierung zu nutzen.

Die einzelnen LEDs 3 bzw. ganz allgemein Lichtquellen können in bekannter Weise individuell angesteuert werden, um ein jeweils gewünschtes Lichtbild zu erzeugen, das sich auch dynamisch ändern kann.

Der Begriff Matrix soll im Rahmen der gegenständlichen Anmeldung auch für den Extremfall gelten bei welchem die Matrix einzeilig ist, somit nur eine Reihe von Lichtleitelementen vorhanden ist, was in der Kraftfahrzeug-Beleuchtungstechnik durchaus Sinn macht. Ist die Matrix mehrzeilig, so kann mit Vorteil vorgesehen werden, dass Lichtleitelemente 6 einer untersten Reihe (Zeile) von Lichtleitelementen oder Lichtleitelemente 6 einer obersten Reihe eine Einschnürung 14 aufweisen. Natürlich kann auch eine unterste Reihe und eine oberste Reihe entsprechende Lichtleitelemente aufweisen, wobei anzumerken ist, dass nicht notwendigerweise sämtliche Lichtleitelemente einer Reihe (Zeile) gleich gestaltet sein müssen bzw. eine Einschnürung besitzen müssen.

Erfahrungsgemäß ist der Aufbau eines Scheinwerfers bzw. Scheinwerfermoduls mit matrixartiger Anordnung besonders effizient, wenn die Lichtleitelemente in genau drei übereinander angeordneten Reihen angeordnet sind, die gemeinsam eine Fernlichtverteilung bilden. Bei einer solchen Anordnung kann die obere Reihe als Vorfeldreihe, die mittlere Reihe als Asymmetriereihe und die untere Reihe als Fernlichtreihe ausgebildet sein, wobei die Fernlichtreihe aus Fernlicht-Lichtleitelementen mit Einschnürungen der gegenständlichen Art versehen ist.

Bei sogenannten Pixel-Fernlicht-Modulen können alle Fernlicht-Lichtleitelemente in genau einer Reihe angeordnet und mit Einschnürungen ausgebildet sein. Zweckmäßigerweise ist die unterste Reihe die Fernlicht-Reihe (oder "Zeile").

In den Fig. 5 und 6 sind in der Zeichnung sinngemäße Abbildungen eines Lichtleitelements nach dem Stand der Technik gezeigt, damit die Einschnürung 14 nach der Erfindung, welche dem Stand der Technik fremd ist, besser erkannt werden kann.

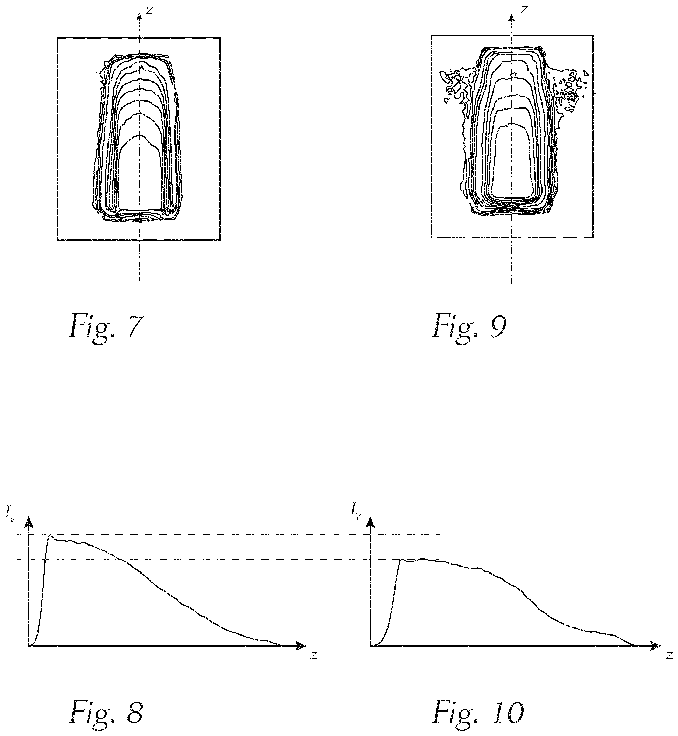

Die nun folgende Erläuterung zur Gegenüberstellung der **Fig. 7** und **8** bzw. **9** und **10** macht die Vorteile der Erfindung deutlicher.

Fig. 7 zeigt eine beispielsweise Lichtverteilung eines einzelnen Lichtleitelements, das gemäß der Erfindung ausgebildet ist, mit eingezeichneten Linien gleicher Lichtstärke und Fig. 8 zeigt den Verlauf der Lichtstärke Iv längs der eingezeichneten mittigen Linie z der Fig. 7, wobei die linke Seite des Diagramms dem unteren Bereich der Fig. 7 entspricht.

Fig. 9 entspricht der Darstellung der Fig. 7, jedoch für ein Lichtleitelement nach dem Stand der Technik, wie in Fig. 5 und 6 dargestellt. Man erkennt unerwünschte Streulichtbereiche beidseitig des gewünschten Lichtbilds, die sich bei dem Lichtleitelement nach der Erfindung nicht finden, wie die gegenübergestellte Fig. 7 zeigt.

In Fig. 10, welche dem Diagramm der Fig. 8, jedoch für ein Lichtleitelement nach dem Stand der Technik entspricht, erkennt man, dass der Lichtstärkeverlauf eine geringere maximale Lichtstärke aufweist, als jener eines Lichtleitelements nach der Erfindung, wie die gegenübergestellte Fig. 8 zeigt.

Mit einem Scheinwerfer der gezeigten Art kann beispielsweise ein Abblendlicht oder ein Fernlicht erzeugt werden, wozu beispielsweise der linke Scheinwerfer und der rechte Scheinwerfer je als erfindungsgemäßer Scheinwerfer ausgebildet sind, mit welcher je der linke bzw. rechte Teil der Lichtverteilung erzeugt werden. Andererseits können der linke und der rechte Scheinwerfer auch identische Lichtbilder erzeugen, die sich auf der Straße überlagern.

**Liste der Bezugszeichen**

| | | | |
|---|---|---|---|
| 1 | Kraftfahrzeugscheinwerfer | bₐ | Breite |
| 2 | Leuchteinheit | bₑ | Breite |
| 3 | LEDs | bₘ | Breite |
| 4 | Vorsatzoptik | | |
| 5 | Lichtaustrittsfläche | | |
| 6 | Lichtleitelemente | | |
| 7 | Projektionsoptik | | |
| 8 | Lichteinkoppelfläche | | |
| 9 | Lichtauskoppelfläche | | |
| 10 | Seitenflächen | | |
| 11 | Dachfläche | | |
| 12 | Bodenfläche | | |
| 13 | Abkantungen | | |
| 14 | Einschnürung | | |

## Patentansprüche

1. Kraftfahrzeugscheinwerfer (1) mit einer Leuchteinheit (2), welche zumindest eine Lichtquelle (3) und eine Vorsatzoptik (4) mit einer Lichtaustrittsfläche (5) aufweist, und mit einer der Leuchteinheit nachgeordneten Projektionsoptik (7), wobei die Vorsatzoptik mehrere Lichtleitelemente (6) mit je einer Lichteinkoppelfläche (8) zum Einspeisen von Licht der zumindest einen Lichtquelle und mit in der Lichtaustrittsfläche der Vorsatzoptik liegenden Lichtauskoppelflächen (9) aufweist, sich das Lichtleitelement zwischen der Lichteinkoppelfläche und der Lichtauskoppelfläche erstreckt, wobei die Lichtauskoppelfläche eine größere Fläche besitzt als die Lichteinkoppelfläche, das Lichtleitelement seitlich von zwei Seitenflächen (10), oben von einer Dachfläche (11) und unten von einer Bodenfläche (12) begrenzt ist und zwischen der Lichtauskoppelfläche und der Lichteinkoppelfläche verjüngt verlaufend ausgebildet ist, wobei die Breite der Bodenfläche/ und oder der Dachfläche von der Lichtaustrittsfläche ausgehend abnimmt,
**dadurch gekennzeichnet, dass**
die Bodenfläche (12) und/oder die Dachfläche (11) zumindest eines Lichtleitelements (6) hinsichtlich ihrer Breite zwischen der Lichtauskoppelfläche (9) und der Lichteinkoppelfläche (8) eine Einschnürung (14) mit einer minimalen Breite (bₘ) der Bodenfläche und/oder der Dachfläche aufweist.

2. Kraftfahrzeugscheinwerfer (1) nach Anspruch 1, **dadurch gekennzeichnet, dass** die Dachfläche (11) und/oder die Bodenfläche (12) über schmale Abkantungen (13) beidseitig in die Seitenflächen (10) übergeht.

3. Kraftfahrzeugscheinwerfer (1) nach Anspruch 1 oder 2, **dadurch gekennzeichnet, dass** die Lichtleitelemente (6) in einer matrixartiger Anordnung zusammengefasst sind.

4. Kraftfahrzeugscheinwerfer (1) nach Anspruch 3, **dadurch gekennzeichnet, dass** Lichtleitelemente (6) einer untersten Reihe einer zumindest zweizeiligen Matrix von Lichtleitelementen eine Einschnürung (14) aufweisen.

5. Kraftfahrzeugscheinwerfer (1) nach Anspruch 3, **dadurch gekennzeichnet, dass** Lichtleitelemente (6) einer obersten Reihe einer zumindest zweizeiligen Matrix von Lichtleitelementen eine Einschnürung (14) aufweisen.

6. Kraftfahrzeugscheinwerfer (1) nach einem der Ansprüche 1 bis 5, **dadurch gekennzeichnet, dass** Lichtleitelemente (6) in ihrem vorderen Bereich einstückig miteinander verbunden sind.

7. Kraftfahrzeugscheinwerfer (1) nach Anspruche 3 bis 6, **dadurch gekennzeichnet, dass** die Lichtauskoppelflächen (9) der Lichtleitelemente (6) zu der Lichtaustrittsfläche (5) der Vorsatzoptik (4) zusammenfallen.

8. Kraftfahrzeugscheinwerfer (1) nach einem der Ansprüche 1 bis 7, **dadurch gekennzeichnet, dass** die Breite (bₘ) der Einschnürung (14) 10 bis 80 % der Breite (bₑ) der Lichteinkoppelfläche (8) beträgt.

9. Kraftfahrzeugscheinwerfer (1) nach einem der Ansprüche 1 bis 8, **dadurch gekennzeichnet, dass** die Einschnürung (14) in der der Lichteinkoppelfläche (8) nächstgelegenen Hälfte des Lichtleitelements (6) ausgebildet ist.
